# EUROPEAN PATENT APPLICATION

(11) **EP 3 872 296 A1**
(43) Date of publication of application: **01.09.2021**
(21) Application number: 20159582.4
(22) Date of filing: 26.02.2020
(51) Int. Cl.: E21B 33/13, C04B 26/00

(54) **METHOD OF SEALING A SPACE WITHIN A WELLBORE WITH A RESIN**

(71) Applicant: Shell Internationale Research Maatschappij B.V., 2596 HR The Hague (NL)
(72) Inventor: Erik Kerst CORNELISSEN, 1031 HW AMSTERDAM (NL); Sam Gerard VAN MOORSEL, 1031 HW AMSTERDAM (NL)
(74) Representative: Shell Legal Services IP

(57) **Abstract**

A space within a wellbore is sealed with a resin. Uncured resin is injected into a wellbore fluid within the space, and the resin is cured in the space by allowing a chemical reaction between the resin and a remaining fraction of the wellbore fluid in the space.

## Description

### FIELD OF THE INVENTION

The present invention relates to a method of sealing a space within a wellbore with a resin.

### BACKGROUND TO THE INVENTION

A method and system for sealing of cavities, such as micro-annuli and/or other cavities, in an annulus surrounding a tubular in a subterranean wellbore is disclosed in WO 2018/115053 A1. This method uses a multi-component resin of which components are mixed within a downhole tool, before the mixed sealant is introduced into the annulus. Alternatively, the components may be mixed at surface and pumped down. In each of these cases, curing of the resin sealant starts immediately after mixing, leaving limited time to pump and/or squeeze the resin before polymer curing occurs.

### SUMMARY OF THE INVENTION

In accordance with the present invention, there is provided a method of sealing a space within a wellbore with a resin, comprising injecting an uncured resin into a wellbore fluid within said space, and curing said resin in said space by allowing a chemical reaction between the resin and a remaining fraction of the wellbore fluid in the space.

### BRIEF DESCRIPTION OF THE DRAWINGS

The drawing figures depict one or more implementations in accordance with the present teachings, by way of example only, not by way of limitation. In the figures, like reference numerals refer to the same or similar elements.
Fig. 1 schematically shows a first wellbore before applying the method;
Fig. 2 schematically shows the wellbore of Fig. 1 during application of the method;
Fig. 3 schematically shows the wellbore of Fig. 1 after application of the method;
Fig. 4 schematically shows a first step of an alternative way of applying the method;
Fig. 5 schematically shows a subsequent step of the alternative method of Fig. 4; and
Fig. 6 schematically shows another subsequent step of the alternative method of Fig. 4.

### DETAILED DESCRIPTION OF THE INVENTION

The person skilled in the art will readily understand that, while the detailed description of the invention will be illustrated making reference to one or more embodiments, each having specific combinations of features and measures, many of those features and measures can be equally or similarly applied independently in other embodiments or combinations. The drawings are illustrative only, and not to scale. All cited viscosity values are dynamic viscosity values as determined by the appropriate Brookfield test method at 25 °C. Given values are indicative.

Disclosed is method of sealing a space within a wellbore with a resin. The space may be formed by an annulus within the wellbore around a wellbore tube. The space may be at least partly occupied by a permeable substance, whereby permeable pores then form the space which can be sealed by said resin. The space may thus be formed by cavities within a cement sheath in the wellbore, and/or micro-annuli between a cement sheath and an adjacent well tubular. The present invention uses a wellbore fluid, which is anyway present within such space, as the second component of the resin sealant system. An uncured component of a sealant resin is injected into the wellbore fluid within said space. The thus injected component is cured in the space by allowing a chemical reaction between the resin and the wellbore fluid that is present in the space. Thereby, a solid material is formed which creates a seal in the wellbore.

In the context of the present specification, each "component" of the resin sealant system may consist of a pure compound or comprise a mixture of compounds. The first component is usually a functional resin portion of the resin sealant system, whereas the second component is acts as hardener. The hardener is typically understood to be a separate ingredient that reacts with the functional resin portion of the first component. The compounds within one "component" generally do not react with each other, in absence of other molecules.

No pre-mixing of the first and second components is needed on site, at surface or before injecting. The resin can thus have a very long shelf-life, as long as contact with the wellbore fluid and other fluids which may contain the relevant reactive molecules (e.g. water or moisture) is prevented. No resin will cure inside a wellbore tool as long as the wellbore fluids or fluids containing the relevant reactive molecules are kept out, which has advantages for tool maintenance.

The resin will first start to cure subsequent to injection, as the second component is a wellbore fluid that is already present in the space into which the resin is injected. The new resin pumped or injected will have a well-defined and predetermined viscosity before injecting.

The wellbore may be well for an oil and/or gas, or a geothermal well application. The wellbore fluid may be a hydrocarbon fluid, such as oil or natural gas, an aqueous fluid, such as water or brine, and combinations thereof. Suitably, the resin which is injected is water-curable whereby the wellbore fluid comprises water (typically in the form of brine).

Water curable (or moisture curable) resins are commercially available. Known prior application of such resins is found in certain glues and coating systems (paints) such as moisture cure urethane coatings (MCU coatings). A suitable class of such water curable resins is based on isocyanates. Isocyanates are organic molecules that have an isocyanate group characterized by -N=C=O: for example R-N=C=O where R can be any group of atoms or any (organic) side chain of any length. The organic molecules suitably comprise multiple functional isocyanate groups, such as diisocyanates. A well-known example of a di-isocyanate is methylene diphenyl di-isocyanate (MDI). Such isocyanates chemically react with active hydrogen atoms which can be provided in alcohols, amines, amides, ureum, and also water. Under reaction with water, the iso-cyanates react and form both polymer molecules as well as ureum cross links between successive polymer molecules thus forming a three-dimensional network that can have excellent sealing properties. The amount of carbon dioxide formed during the reaction is sufficiently small to not cause problems or leak paths.

An example of a suitable water curable resin comprises an isomeric mixture of toluene-2,4-diisocyanate and toluene-2,6-diisocyanate, as disclosed in J. of Petroleum Technology Vol. 18(3), pp. 306-312 (March 1966). Another example is polyurethane injection resin commercially available under the name "SpeTec ®" from Koramic Construction Chemicals, Wommelgem, Belgium. SpeTec ® Soil H40 is a single component resin which comprises an accelerator which can be pre-mixed. SpeTech ® Soil H40 contains 4,4'-methylenediphenyl diisocyanate, propylenecarbonate, and difenylmethane-4,4'-diisocyanate and it has a dynamic viscosity of about 100 mPa.s at 25 °C as determined by Brookfield SP3 - 200 tr/min test. The accelerator contains 2,2-dimorfolino diethylether.

An alternative resin has been proposed in US Patent 9,840,655, which comprises a hardenable acid curable resin and a hydrolysable dimer acid ester. Upon contacting of the unconsolidated particles with the reaction product of the hardenable acid curable resin, hydrolysable acid ester and water in the formation, the particulates are consolidated.

The formation of the three-dimensional network is facilitated by displacing a majority of the wellbore fluid from the space which is to be sealed, with the resin. Herewith the chemical reaction can take place in a condition where there is excess resin during said chemical reaction compared to the wellbore fluid. Excess resin molecules are then forced to react with themselves rather than only with the wellbore fluid.

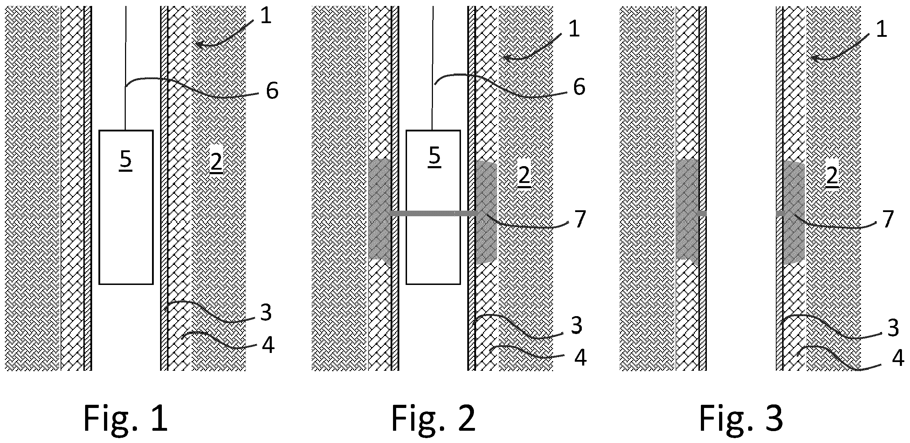

Fig. 1 schematically shows a cross sectional view of a wellbore 1 in a formation rock 2 in the Earth. In the example of Fig. 1, the wellbore 1 is a cased wellbore comprising a wellbore tube in the form of casing tubing 3. In oil and gas industry, wellbores are frequently provided with casing tubing 3 cemented into place with a cement layer 4 in an annulus between the casing tubing and the formation rock 2 or another tubing.

In some cases, resin may be used instead of such cement. In other cases, such as illustrated, resin may be used to fill and thereby repair micro pores, including micro annuli, within such an annulus. Such micro pores and micro annuli are typically filled with a wellbore fluid, which typically contains oil or gas mixed with an aqueous fluid (tyically water or brine).

To accomplish resin injection, a resin injection tool 5 may be run into the wellbore 1. Tools that allow such resin injection are known in the art, and in addition to WO 2018/115053 A1 reference is made to US Patent 2,381,929 as merely one of many other suitable examples. A suitable injection tool provided with a non-return valve is described in European patent application No. 19174667.6, filed 15 May 2019, and incorporated herein by reference. Such tools may be capable of perforating a wellbore tubular such as a casing tubing prior to said injection, or such tools may be run in pre-perforated tools. Resin injection tools can be run on a wireline 6, an e-line, on tubing, or in any other suitable manner.

As shown in Fig. 2, the uncured resin 7 is injected into the wellbore fluid which occupies the micro pores. Most of the wellbore fluid may be displaced by and/or thereby be driven out by the resin 7. The resin 7 is cured by allowing a chemical reaction between the resin 7 and a remaining fraction of the wellbore fluid in the space.

Fig. 3 shows the wellbore 1 after the resin 7 has cured and the resin injection tool has been retrieved on the wireline. The procedure can be repeated in different locations in the wellbore.

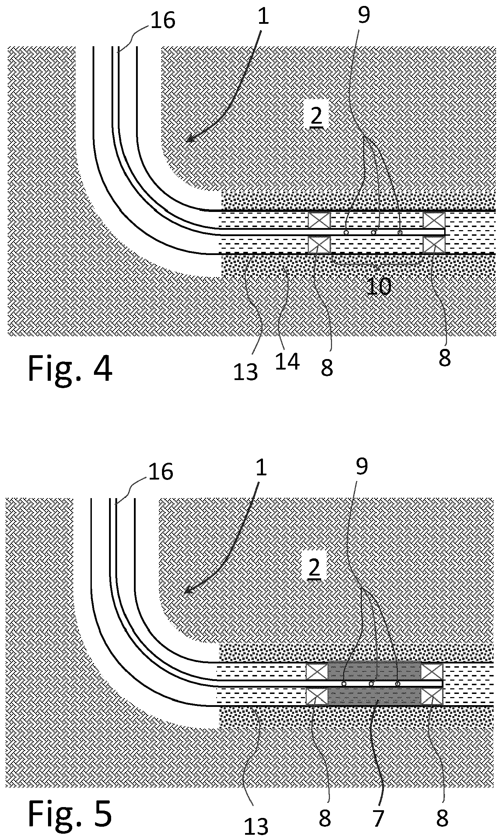

Figs. 4-6 illustrate an alternative injection method, which uses an injection string 16 and straddle packers 8. This may be particularly suitable for injecting larger amounts of the resin. An example application would be to accomplish water shut off in a hydrocarbon zone that suffers from water breakthrough. The straddle packers 8 may comprise inflatable packers. Various straddle systems, such as for example TAM International's PosiFrac ™ straddle system or Schlumberger's ACTive Straddle system, are known and commercially available in the industry. The injection string 16 may comprise coiled tubing. Ports 9 are provided in the zone between the straddle packers 8 through which fluids can be injected from the string into the selected zone 10. The various fluids that are injected into the selected zone 10 can be pumped in a sequence of volumes one after another, separated by darts. The darts are suitably configured with a rupture disk, so that a number of darts can be run in a train having different fluid slugs between them.

In the example of Figs. 4-6, the borehole 1 has been completed with a wellbore tube in the form of a screen 13. A gravel pack 14 has been installed within the annular space extending between the screen 13 and the formation rock 2. Normally the gravel pack 14 is intended to be permeable to wellbore fluids. However, in case of water breakthrough it may be advantageous to shut affected zones off from production in order to avoid production of water. The resin may be injected in order to plug permeability of selected zones.

Fig. 4 schematically shows a first step of an alternative way of applying the method. After running in the injection string 16, which may suitably comprise of coiled tubing, the straddle packers 8 are set. This may involve inflating of, or otherwise radially expanding of, the straddle packers 8 against the screen 13. The straddle packers 8 thus isolate the selected zone 10 from the remainder of the screened section of the borehole 1. Optionally, the selected zone 10 may be preflushed via ports 9 to replace the wellbore fluid from the annulus between the injection string 16 and the screen 13. Optionally, a return line is provided to remove the wellbore fluid. Care should be taken to leave wellbore fluid in the pores of the gravel pack 14, where it can act as hardener for the resin 7.

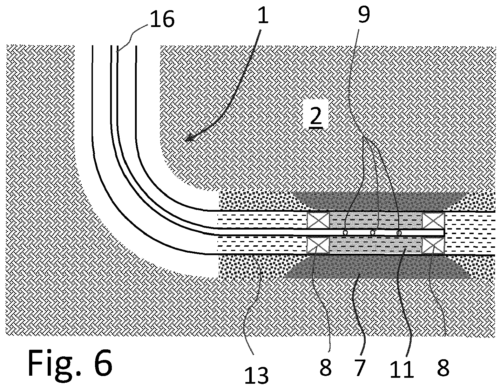

Fig. 5 schematically shows the resin 7 being injected into the selected zone 10. As the surrounding gravel pack 14 is permeable, the resin 7 will penetrate into the wellbore fluid that is present in the pores of the gravel pack 14. This may be aided by administering an overflush fluid 11 which may be injected subsequent to the resin 7. The result is schematically shown in Fig. 6. The resin 7 occupies the pores of the gravel pack 14 and is left to react with the wellbore fluid in which it was injected. Although not shown in the schematics of Fig. 6, the resin 7 may penetrate into the surrounding formation rock 2 where it can also be allowed to react with the wellbore fluid. The overflush fluid 11 may also function to remove excess resin from the annulus between the injection string 16 and the screen 1. Herewith it is avoided that the resin 7 blocks the entire zone 10 and would need to be drilled out. The overflush fluid preferably is inert in that it does not react with the uncured resin.

The end result is that at least the pores in the gravel pack 14 are filled with cured resin 7 to create a shut-off zone. The straddle packers 8 may be deactivated and the injection string 16 may be removed.

Suitably, the viscosity of the overflush fluid is higher than the viscosity of the (uncured) resin 7. This facilitates an effective displacement of the resin 7 into the gra with the overflush fluid. Suitably, the viscosity of the preflush fluid is higher than that of the formation fluid which is originally present in the pores of the formation. By selecting one or more of the relative viscosities such that the viscosity of the successive fluids increases relative to the previous fluids, a good displacement and dispersion of the previous fluids present in the pores can be achieved.

A laboratory test was done wherein a polyurethane resin was injected into a cement plug of 35 cm length cast in a steel tube. A micro annulus had formed between the tube and the cement plug, which was caused by shrinkage of the cement. The resin was injected in the middle of the cement plug though the wall of the steel tube, at an initial rate of about 7 ml/minute, and with a constant injection pressure differential of 80 bar and at a temperature of 40 °C. The resin cured during injection, with water from the cement. The injection rate gradually declined and over the course of about one hour it declined to zero. After injection the cement plug was leak tight. Visual inspection revealed that the resin had displaced over 17 cm to both ends of the cement plug.

The space in the wellbore may also be in a leaking (or not leaking) pipe joint.

The person skilled in the art will understand that the present invention can be carried out in many various ways without departing from the scope of the appended claims.

## Claims

1. A method of sealing a space within a wellbore with a resin, comprising injecting an uncured resin into a wellbore fluid within said space, and curing said resin in said space by allowing a chemical reaction between the resin and a remaining fraction of the wellbore fluid in the space.

2. The method of claim 1, wherein the wellbore fluid is selected from the group consisting of: hydrocarbon fluid and aqueous fluid; and combinations thereof.

3. The method of claim 1, wherein the wellbore fluid comprises water or brine.

4. The method of any one of the preceding claims, wherein the resin comprises an isocyanate.

5. The method of any one of the preceding claims, displacing a majority of the wellbore fluid from said space with the uncured resin, whereby there is excess resin during said chemical reaction compared to the wellbore fluid.

6. The method of any one of the preceding claims, wherein the space comprises pores and/or cavities within a cement sheath in the wellbore.

7. The method of any one of claims 1 to 5, wherein the space comprises by micro-annuli between a cement sheath and an adjacent well tubular.

8. The method of any one of claims 1 to 5, wherein the space comprises pores and/or cavities within a gravel pack in the wellbore.

9. The method of any one of the preceding claims, wherein said space is located an annulus within the wellbore around a wellbore tube.

10. The method of claim 9, wherein said space is at least partly occupied by a permeable substance.

11. The method of any one of claims 1 to 5, wherein said space is formed by a leaking pipe joint.

12. The method of any one of the preceding claims, wherein a majority of said remaining fraction of the wellbore fluid is not physisorbed on any surface.
